# EUROPEAN PATENT APPLICATION

(11) **EP 1 721 873 A1**
(43) Date of publication of application: **15.11.2006**
(21) Application number: 05709773.5
(22) Date of filing: 04.02.2005
(51) Int. Cl.: C03C 15/00, G02B 1/00, G11B 5/73, G11B 5/84

(54) **METHOD FOR PRODUCING GLASS SUBSTRATE HAVING CONCAVE AND CONVEX PORTIONS IN SURFACE THEREOF**

(30) Priority: 18.02.2004 JP 2004041285
(71) Applicant: Nippon Sheet Glass Company, Limited, Tokyo 105-8552 (JP); Olympus Corporation, Tokyo 151-0072 (JP)
(72) Inventor: KURACHI, Junji, c/o NIPPON SHEET GLASS COMPANY LTD, Tokyo 1058552 (JP); KOYAMA, Akihiro, c/o NIPPON SHEET GLASS CO. LTD., Tokyo 1058552 (JP); OKAMOTO, Shinya, c/o NIPPON SHEET GLASS CO. LTD., Tokyo 1058552 (JP); SAITO, Yasuhiro, c/o NIPPON SHEET GLASS CO. LTD., Tokyo 1058552 (JP); TSUNETOMO, Keiji, c/o NIPPON SHEET GLASS CO. LTD., Tokyo 1058552 (JP); KOYO, Hirotaka, c/o NIPPON SHEET GLASS COMPANY LTD, Tokyo 1058552 (JP); HIDAKA, Takeshi, 1920916 (JP); KASAI, Hiroaki, 1960015 (JP); NAKAMURA, Yasushi, 4-28-6, Commore Shiotsu,, Kitatsuru-gun, Yamanashi 4090126 (JP)
(74) Representative: Hart Davis, Jason
(86) International application number: PCT/JP2005/001708
(87) International publication number: WO 2005/077852

(57) **Abstract**

The present invention provides a glass substrate having a minute texture being provided on the surface and having good acid durability with high protrusion forming efficiency. According to the present invention, unevenness is formed on the surface by pressing a predetermined area of the surface of the glass substrate containing at least one oxide selected from the group consisting of SiO₂, B₂O₃, P₂O₅, GeO₂, As₂O₅, ZrO₂, TiO₂, SnO₂, Al₂O₃, MgO, and BeO and having a composition wherein the content of this at least one oxide is above 90 mol %, and subsequently by etching an area including this predetermined area. In the composition of this glass substrate, the ratio of oxides of network formers or intermediates is high, so that the glass substrate becomes easy to be compressed. This enables to obtain high protrusion forming efficiency even when selective leaching of a component easily leached into etchant is not employed, thereby satisfying acid durability as well.

## Description

### TECHNICAL FIELD

The present invention relates to a method for manufacturing a glass substrate having an uneven surface.

### BACKGROUND ART

The use of magnetic recording medium-use substrates, optical elements, and the like, may require minute unevenness formed on the surface of a glass substrate. To provide a minute texture on the surface of the glass substrate, it is necessary to use a method appropriate for a glass, which is a typical brittle material.

A processing method has been proposed for forming unevenness on the surface of a glass substrate by creating a density difference on the surface of the glass substrate and utilizing a difference in etching rate derived from this density difference (References 1, 2). In this processing method, first, an indenter made of diamond is pressed against the surface of the glass substrate so that a compressed layer is formed partially, for example, and the surface is subsequently etched by using hydrofluoric acid (fluorinated acid), for example. The etching rate is relatively low in the compressed layer, and thus, a convex portion is formed in an area where the compressed layer is formed, after the etching.

JP-A-2002-160943 (Reference 1) discloses that a glass including SiO₂ and Al₂O₃ is suitable for this processing method. Al₂O₃ in the glass easily leaches into acid etchant. In a high-density portion, however, the network structure of SiO₂ is dense, so that leaching of Al₂O₃ is restrained. The difference in etching rate thus generated forms minute unevenness.

JP-A-2003-73145 (Reference 2) discloses that a glass wherein the content difference of Al₂O₃ subtracted from SiO₂ (SiO₂-Al₂O₃) is 40 to 67 mol %, preferably 47 to 57 mol %, is suitable for the above-described processing method. The use of a glass satisfying this condition can improve protrusion forming efficiency, and thus, a high convex portion can be obtained after the etching. Fig. 5 in JP-A-2003-73145 shows that the protrusion forming efficiency peaks in a range in which (SiO₂-Al₂O₃) in a glass composition stays between 47 to 57 mol %.

### DISCLOSURE OF THE INVENTION

When a glass having such a composition that the protrusion forming efficiency becomes high is used according to the description of the above-described publications, the chemical durability of the resultant glass substrate, particularly acid durability, is not satisfactory. As understood therefrom, although the conventional processing method is appropriate for providing a minute texture on the glass surface, it is difficult to satisfy both of the acid durability and the high protrusion forming efficiency. This admits of improvement.

In the present invention, protrusion forming efficiency is improved by greatly changing the density of a glass, which follows pressing. Thereby, it is intended to attain both of the protrusion forming efficiency and the acid durability. Studies on the use of various glass compositions revealed that the protrusion forming efficiency could be improved by not only selective leaching of Al₂O₃, but also by greatly changing a local density of a glass. The present invention is completed based on this knowledge.

That is, the present invention provides a method for manufacturing a glass substrate having an uneven surface, the method comprising pressing a predetermined area on the surface of the glass substrate and etching an area including the pressed predetermined area, thereby forming unevenness on a surface, wherein the glass substrate includes at least one oxide selected from the group consisting of SiO₂, B₂O₃, P₂O₅, GeO₂, As₂O₅, ZrO₂, TiO₂, SnO₂, Al₂O₃, MgO, and BeO, and has a composition wherein the content of the at least one oxide is above 90 mol %. The present invention further offers a glass substrate having an uneven surface obtained by this manufacturing method. When two or more oxides described-above are included, the total of contents of the oxides should be above 90 mol %.

According to the present invention, it is possible to easily attain both of protrusion forming efficiency and acid durability in a processing method of a glass substrate, including a partial pressing step and an etching step.

### BRIEF DESCRIPTION OF THE DRAWINGS

Fig. 1 is a flowchart of each step in one example of a manufacturing method of the present invention, shown in sectional views;
Fig. 1 (a) shows an indenter for pressing one portion of the surface of a glass substrate;
Fig. 1 (b) shows a compressed layer formed on the surface of the glass substrate by pressing;
Fig. 1 (c) shows a convex portion formed by etching after the pressing;
Fig. 1 (d) shows a state after an alteration layer, formed by the etching, is removed;
Fig. 2 is a flowchart of each step in another example of the manufacturing method of the present invention, shown in sectional views;
Fig. 2 (a) shows an indenter moving while pressing one portion of the surface of a glass substrate;
Fig. 2 (b) shows a convex portion formed by etching after the pressing;
Fig. 2 (c) shows a state after a deformed layer, formed by the etching, is removed;
Fig. 3 is a view of a relationship between protrusion forming efficiency and a glass composition;
Fig. 4 is a view of a relationship between an etching rate and a glass composition; and
Fig. 5 is an explanatory diagram of a method of calculating protrusion forming efficiency.

### BEST MODES OF EMBODIMENTS OF THE INVENTION

Hereinafter, all % representations indicating a content of components denote "mol %".

Generally, the structure of a glass is explained using a random network model. According to this model, network formers typical of Si⁴⁺ form a random network structure (glass skeleton) together with oxygen (O²⁻) in oxide glasses, and network modifiers typical of Na⁺ are distributed in this network so that local electroneutrality is maintained. A role of cations (whether acting as the network former or the network modifier) depends upon a coordination number of the cations to oxygen atoms, bond strength to the oxygen, and the like. The network former exhibits relatively high single bond strength to the oxygen, and the network modifier is relatively low in this value. The typical elements that function as the network former include Si, P, Ge, and As, and the typical network modifier elements include Li, Na, K, Ca, Sr, and Ba. The network modifier penetrates into gaps of the network structure, thereby preventing compression of the network structure.

Pressing a member such as an indenter into one portion of the surface of a glass forms a high density portion and a low density portion in the network structure of the glass. In the high density portion, leaching of Al₂O₃ is prevented, so that an etching rate becomes slow. A change in etching rate becomes greater with the increase of the amount of change in density. In the conventional glasses, however, the amount of change in density is small, so that a difference in etching rate, derived from the change in density, falls within a small range. This is because the glass used in the conventional processing method includes a considerable amount of alkali metal oxides and alkaline earth metal oxides (at least 10% or less) for improving meltability of materials, and the like, and network modifiers supplied from these oxides prevent a partial compression of the network structure. As a result, the conventional protrusion forming mechanism needs to be aided by selective leaching of Al₂O₃ that causes the change in etching rate with a slight density change. In a glass composition, too, it has been important that a content difference of subtracted Al₂O₃ from SiO₂ stays within a predetermined range.

Even so, as disclosed above, when a content of the network modifier is limited so that the total of contents of SiO₂, B₂O₃, P₂O₅, GeO₂, As₂O₅, ZrO₂, TiO₂, SnO₂, Al₂O₃, MgO, and BeO is above 90%, the glass becomes sufficiently compressable. As a result, it is possible to improve acid durability, and at the same time, to obtain high protrusion forming efficiency.

The typical oxides for supplying the network modifier include Li₂O, Na₂O, K₂O, CaO, SrO, and BaO. In the present invention, the total amount of these oxides is limited to less than 10%. Mg²⁺ and Be²⁺, which belong to group 2 unlike the cations composing the above-described oxides (Li₂O to BaO), do not notably deteriorate the protrusion forming efficiency probably because of a relatively small ion radius. In this specification, Mg²⁺, which is often classified into a network modifier, is classified as an intermediate having an intermediary function between the network former and the network modifier, as well as Zr⁴⁺, Ti4⁺, Sn⁴⁺, Be²⁺, and the like.

B³⁺ and Al³⁺ serve as the network former in a range equal to or less than the total of the above-described oxides (Li₂O to BaO). B³⁺ and Al³⁺, similar to Mg²⁺, above this total are classified as the intermediate in this specification because of a small ion radius.

In the present invention, it is desired that the composition of the glass substrate includes SiO₂ as an essential component at the preferable content of 74% or more. In addition, in a composition wherein the content of the network modifier is low, it is easier to satisfy both of the protrusion forming efficiency and the acid durability when a value of a content of Al₂O₃ subtracted from the content of SiO₂ is 70% or more, contrary to the teaching of the above-described references.

The composition of the glass substrate preferably further includes SiO₂, and the like, and at least one selected from the group consisting of Al₂O₃ and B₂O₃ as the essential component. These oxides selectively leach into acid etchant, so that these oxides contribute to improving the protrusion forming efficiency. The content of at least one selected from the group consisting of Al₂O₃ and B₂O₃ is preferably 5 to 20%, particularly preferably 10 to 20%. When the total of these components is above 20%, the acid durability deteriorates, and phase separation tends to occur in the glass. The phase-separated glass differs in etching rate depending on the phase, and therefore, it becomes difficult to obtain a smooth surface on which minute unevenness is formed.

B₂O₃ is a preferable component since it supplies the network former and has an effect of softening the glass. A preferable addition amount of B₂O₃ is above 0 (zero)% and 20% or less, preferably 5 to 20%, and more preferably 8 to 20%.

A large compression of the glass network structure generates a large etching rate difference. In view of this, the larger the content of the oxide of the network former, the better. For example, the total of the content of SiO₂ and the content of at least one selected from the group consisting of Al₂O₃ and B₂O₃, that is, the total amount of the contents of SiO₂, Al₂O₃, and B₂O₃, is preferably 90% or more.

On the other hand, in a multicomponent glass, when the total of contents of oxides of the network former (network former oxides), or that of contents of oxides (intermediate oxides) is too high, the acid durability of the glass may rather deteriorate. In order to avoid this, the total of contents of the above-described oxides (SiO₂ to BeO) is preferably 95% or less, and more preferably 93 to 95%.

For preventing the split phase of the glass, 0.1% or more of at least one selected from the group consisting of bivalent metal oxides and K₂O may be added. Herein, the bivalent metals include Mg, Ca, Sr, Ba, Zn, and the like. From a similar standpoint, a glass substantially free from Li₂O preferably is used. Herein, "substantially free from" means that the content is less than 0.1%.

A multicomponent glass composition wherein the main component is SiO₂ suitable for the present invention is illustrated below.
SiO₂: 74 to 84%, preferably 80 to 84%;
Al₂O₃: 0 to 5%, preferably 0.5 to 3%;
B₂O₃: 5 to 20%, preferably 8 to 20%;
Al₂O₃+B₂O₃: 5 to 20%, preferably 10 to 20%;
SiO₂+Al₂O₃+B₂O₃: 90 to 96%, preferably 93 to 95%;
Li₂O: 0 to 0.1%;
Na₂O: not less than 2% and less than 10%, preferably 4 to 6%;
K₂O: 0 to 2%;
Na₂O+K₂O: not less than 4% and less than 10%;
CaO: 0 to 3%;
SrO: 0 to 3%;
BaO: 0 to 3%;
Li₂O+Na₂O+K₂O+CaO+Sr r O+BaO: not less than 4% and less than 10%; and
MgO: 0 to 3%

This preferable glass composition further may include at least one selected from the group consisting of ZrO₂, TiO₂, SnO₂, and ZnO so that the total amount thereof does not exceed 5% (ZrO₂+TiO₂+SnO₂+ZnO: 0 to 5%). In addition, the glass composition may include colored components such as Fe₂O₃, MnO, NiO, Cr₂O₃, CoO, and the like, so that the total amount thereof does not exceed 1% (Fe₂O₃+MnO+NiO+Cr₂O₃+CoO: 0 to 1%). Furthermore, components not listed above may be mixed therein as impurities unless the content of the components exceeds 1% (other components: 0 to 1%).

Another glass suitable for the present invention is a silica glass. The silica glass composed of SiO₂ is low in thermal expansion coefficient and high in chemical durability, and exhibits good ultraviolet transmissivity. Although it is not possible to suppose from the protrusion forming mechanism (selective leaching of Al₂O₃) disclosed in the above-described references, the use of the silica glass, too, can satisfy both of the protrusion forming efficiency and the acid durability. When the silica glass is etched, instead of applying a condition applicable to etching of a glass composition in which Al₂O₃ selectively leaches, a condition under which the glass is etched more easily is preferably applied through increasing of the concentration of a fluorinated acid, for example. Appropriate adjustment of etching conditions allows sufficiently practical protrusion forming efficiency to be obtained even from the silica glass. Accordingly, the present invention can also be applicable to a glass substrate essentially including only the network former (content of the network former oxide is 99% or more, for example).

The two steps, one of which is a step for pressing a predetermined area set on one portion of the glass surface, more specifically, a step for forming a compressed area and a non-compressed area on the glass surface by pressing the predetermined area, and the other of which is a step for forming unevenness on the glass surface by etching an area including the predetermined area, more specifically, by etching the glass surface in an area including the compressed area and the non-compressed area, may be performed according to the methods disclosed in the above publications.

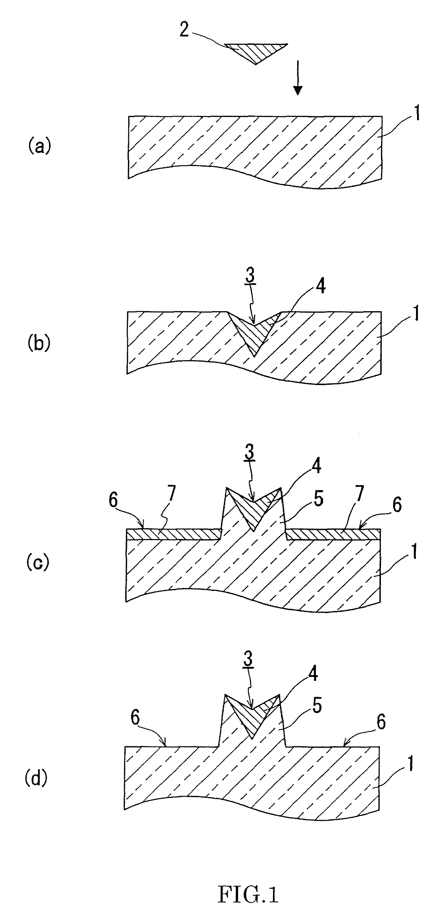

The density difference on the glass surface can be introduced by pressing an indenter 2 having hardness higher than that of a glass substrate 1, for example, against the glass surface with a pressure capable of forming a compressed layer, not causing a crack (Fig. 1). In a case of a diamond indenter, this pressure is preferably about 0.3 to 4 GPa, for example 0.3 to 2 GPa. Insertion of the indenter 2 into a flat surface (Fig. 1 (a)) forms a concave portion 3 on the surface of the glass substrate, and generates a compressed layer 4 where the glass is highly dense below the concave portion 3 (Fig. 1 (b)). When the concave portion 3 and its surrounding portion are brought into contact with acid etchant, an area where the compressed layer 4 is formed is transformed into a convex portion 5 because of the difference in etching rate (Fig. 1 (c)). For the acid etchant, fluorinated acid is suitable. Selective leaching of a glass component relatively greatly progresses in a non-compressed area 6, so that an alteration layer (porous layer) 7 having a relatively high SiO₂ ratio can be formed. This layer 7 may be removed by using alkaline etchant, as required (Fig. 1 (d)). For the alkaline etchant, an aqueous potassium hydroxide solution is suitable, for example.

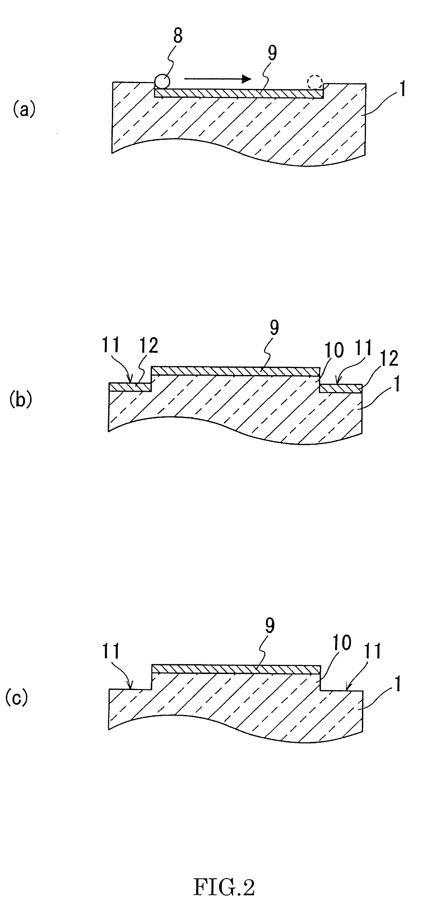

For forming a crest (ridge-shaped) convex portion instead of an island-shaped convex portion, an indenter 8 may be pressed against the glass surface and moved relative to the surface (Fig. 2). A compressed layer 9 (Fig. 2 (a)) formed on the surface of the glass substrate and along a trail of the indenter 8 is relatively small in etching rate relative to the acid etchant compared to a non-compressed area 11, so that a convex portion 10 appears after the etching (Fig. 2 (b)). Even in this embodiment, an alteration layer 12 may appropriately be removed by the alkaline etchant, as required (Fig. 2 (c)).

As long as the density difference can be introduced on the glass surface, there is no limit to the shape, the material, and the like, of the indenter. For example, when the probe of a scanning probe microscope is used as the indenter, the convex portion can be formed precisely.

It is not necessary to use the indenter when the density difference is introduced by pressing. One such example is spraying microparticles onto the glass surface. When a metallic mold on which a convex portion is formed is used, the density difference can be introduced on the glass surface efficiently. When a step for pressing against the glass surface a convex portion in island shape or a linear convex portion corresponding to a predetermined pattern to be formed is introduced, a glass substrate formed with a micro-convex portion of the same pattern can be mass-produced efficiently.

Hereinafter, the present invention will be described in more detail with reference to embodiments.

A batch of each sample 2 to 17 was blended using general glass materials (silicon oxide, boron oxide, aluminum oxide, sodium carbonate, potassium carbonate, magnesium oxide, calcium carbonate, strontium carbonate, barium carbonate, and zirconium oxide) so as to have a composition shown in Table 1. These batches were melted in an electric furnace kept at 1350°C. The electric furnace was further heated up to 1600°C for clarity, and the molten glass was cast onto a metal plate so as to be used as glass samples. Each glass sample was kept in the electric furnace at 650°C for 30 minutes, and the electric furnace was powered off for naturally cooling each glass so that the internal stress was relaxed. These glass samples were processed into plates and surfaces thereof are polished so as to be smooth.

For the sample 1, a commercially available fused silica substrate was used. This substrate, after the surface was polished, was kept at 1190°C for two hours, and then was cooled naturally by turning off the power of electric furnace so that the internal stress was relaxed.

As described above, for relaxing the internal stress, it is preferable that the glass substrate is treated thermally in advance at such a temperature that the glass substrate is not deformed by heat, that is, at or below temperatures of the annealing point, for example. This thermal treatment also can be performed at the temperature below the annealing point of the glass, that is, at the temperatures determined from calculation wherein the annealing point of the glass, which is shown in absolute temperature, is raised to the power of 0.7, for example.

Next, a commercially available stainless cutter was swept on the surface of each glass sample so as to form two linear impressions of 10 mm in length at intervals of 200 µm. Measurement by a stylus-type surface roughness gauge revealed that the depth of the impression of the sample 1 was approximately 50 nm, and those of other glass samples were approximately 100 nm.

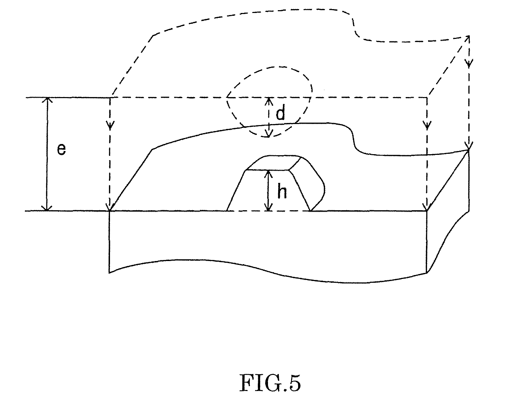

Subsequently, several portions of the surfaces of the glass samples were masked by using a commercially available silicon wafer-use masking material. The surfaces were further soaked in 0.2% concentration of hydrofluoric acid heated up to 60°C, for 30 minutes. It is noted that the sample 1 was soaked into 1.0% concentration of hydrofluoric acid heated up to 50°C, for 10 minutes. Heights of micro-convex portions on the surface formed after etching were measured using a surface roughness gauge, and the etching rate was calculated by stepped portions between a masked portion and a non-masked portion. In addition, protrusion forming efficiency ((h+d)/e) was calculated by an etching amount e, a depth of an initial impression d, and a height h of the convex portion (see Fig. 5). These results are shown collectively in Table 1.

**Table 1**

| | | Example | | | | | | | | | | | | Comparative Example | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| Composition [mol%] | SiO₂ | 100 | 83.2 | 82.7 | 81.2 | 81.8 | 81.1 | 81.9 | 76.0 | 74.0 | 74.0 | 74.0 | 74.0 | 74.0 | 74.0 | 74.0 | 62.5 | 67.5 |
| | Al₂O₃ | 0 | 1.4 | 1.7 | 1.4 | 1.4 | 1.4 | 1.4 | 2.0 | 4.0 | 2.0 | 2.0 | 2.0 | 2.0 | 2.0 | 2.0 | 8.3 | 10.1 |
| | B₂O₃ | 0 | 11.3 | 11.4 | 11.3 | 11.4 | 11.3 | 11.4 | 14.0 | 14.0 | 16.0 | 14.0 | 14.0 | 14.0 | 14.0 | 14.0 | 16.2 | 10.7 |
| | MgO | 0 | 0.0 | 0.0 | 0.0 | 0.0 | 0.0 | 0.0 | 0.0 | 0.0 | 0.0 | 2.0 | 0.0 | 0.0 | 0.0 | 0.0 | 0.0 | 1.0 |
| | ZrO₂ | 0 | 0.0 | 0.0 | 0.0 | 0.0 | 0.0 | 0.0 | 0.0 | 0.0 | 0.0 | 0.0 | 2.0 | 0.0 | 0.0 | 0.0 | 0.0 | 0.0 |
| | Li₂O | 0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| | Na₂O | 0 | 4.1 | 3.7 | 6.1 | 4.1 | 4.1 | 4.1 | 8.0 | 8.0 | 8.0 | 8.0 | 8.0 | 10.0 | 8.0 | 8.0 | 0.0 | 0.0 |
| | K₂O | 0 | 0.0 | 0.5 | 0.0 | 1.3 | 0.0 | 0.0 | 0.0 | 0.0 | 0.0 | 0.0 | 0.0 | 0.0 | 2.0 | 0.0 | 0.0 | 0.0 |
| | CaO | 0 | 0.0 | 0.0 | 0.0 | 0.0 | 2.2 | 0.0 | 0.0 | 0.0 | 0.0 | 0.0 | 0.0 | 0.0 | 0.0 | 0.0 | 0.0 | 5.8 |
| | SrO | 0 | 0.0 | 0.0 | 0.0 | 0.0 | 0.0 | 1.2 | 0.0 | 0.0 | 0.0 | 0.0 | 0.0 | 0.0 | 0.0 | 2.0 | 0.3 | 2.1 |
| | BaO | 0 | 0.0 | 0.0 | 0.0 | 0.0 | 0.0 | 0.0 | 0.0 | 0.0 | 0.0 | 0.0 | 0.0 | 0.0 | 0.0 | 0.0 | 12.7 | 2.8 |
| Network former oxide + intermediate oxide | | 100 | 95.9 | 95.8 | 93.9 | 94.6 | 93.7 | 94.7 | 92.0 | 92.0 | 92.0 | 92.0 | 92.0 | 90.0 | 90.0 | 90.0 | 87.0 | 89.3 |
| Network modifier oxide | | 0 | 4.1 | 4.2 | 6.1 | 5.4 | 6.3 | 5.3 | 8.0 | 8.0 | 8.0 | 8.0 | 8.0 | 10.0 | 10.0 | 10.0 | 13.0 | 10.7 |
| Sample state | | G¹⁾ | G | G | G | G | G | G | G | G | G | G | G | G | G | G | G | G |
| Etching rate (nm/min) | | 17²⁾ | 68 | 56 | 31 | 16 | 11 | 42 | 42 | 55 | 135 | 68 | 58 | 35 | 34 | 86 | 586 | 124 |
| Protrusion forming efficiency | | 0.53 | 0.67 | 0.67 | 0.66 | 0.79 | 0.71 | 0.78 | 0.66 | 0.54 | 0.72 | 0.56 | 0.71 | 0.29 | 0.25 | 0.24 | 0.29 | 0.18 |

| | | | | | | | | | | | | | | | | | | |
|---|---|---|---|---|---|---|---|---|---|---|---|---|---|---|---|---|---|---|
| G=vitrified, 1):silica glass substrate is used, 2) different etching condition is used only in the sample 1. | | | | | | | | | | | | | | | | | | |

In the samples 1 to 12, of which the total amount of typical network modifier oxides (Li₂O, Na₂O, K₂O, CaO, SrO, and BaO) was less than 10%, and the total amount of contents of the network former oxides and intermediate oxides exceeded 90%, the protrusion forming efficiency was 0.5 or more. Contrary to this, in the samples 13 to 17, the protrusion forming efficiency was less than 0.3.

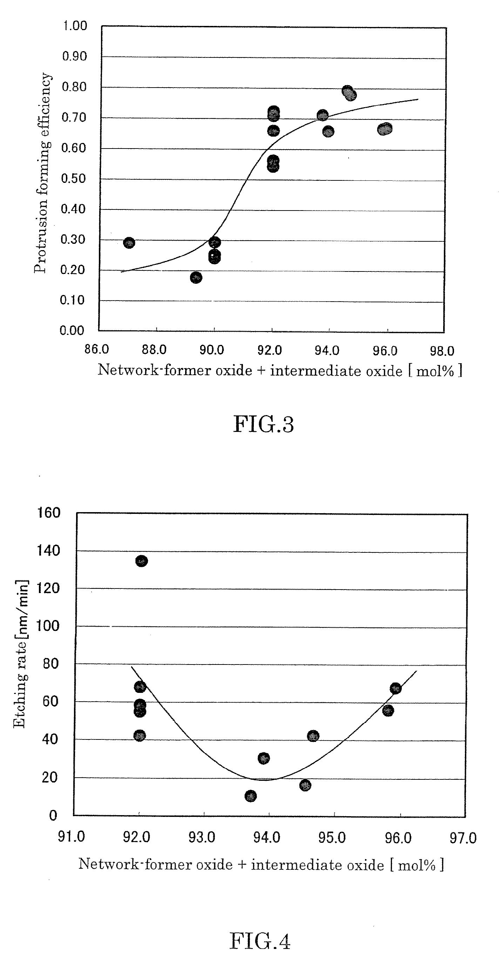

Regarding these glass samples, Fig. 3 shows a relationship between the protrusion forming efficiency and the total amount of the network former oxides and intermediate oxides in the glass composition, and Fig. 4 shows a relationship between the etching rate and the total amount thereof, respectively. When the total amount of these oxides exceeded 90%, the protrusion forming efficiency drastically improved (Fig. 3). Although little is known about the detailed cause, when the ratio, in terms of the oxide, of the network modifier preventing the compression of the network structure fell below 10%, an effect that the compression itself of the network structure attributes to the protrusion forming efficiency becomes evident. On the other hand, the etching rates become the lowest when the total amount of the above-described oxides is 93 to 95% (Fig. 4), and it can be confirmed that in the composition within this range, greater acid durability can be obtained.

Furthermore, two pieces of glass samples each were manufactured so as to be composed as in the samples 2 and 3. One piece each was subjected to thermal treatment wherein the piece was heated up to 580°C once again and then cooled at the rate of 5°C/min. In each glass sample thus obtained, a micro-convex portion was formed in the manner similar to the above. It is noted that each sample was etched by soaking in 1% concentration of fluorinated acid heated up to 70°C, for 15 minutes. This thermal treatment increased the etching rate of the sample 2 from 212 nm/minute to 542 nm/minute, and that of the sample 3 from 172 nm/minute to 312 nm/minute. This increase is due to the phase separation of the glass. It is noted that each protrusion forming efficiency was 0.67, and the level of the phase separation of the sample 3 including K₂O, in particular, was low. In compositions of the samples 2 to 12, too, the phase separation easily can be avoided. It is noted that for the use that needs the thermal treatment in which the phase separation possibly occurs, the addition of K₂O in such a manner as not to exceed a 2% range (the range from above 0% to less than 2%) is preferable for preventing irregular surface unevenness that appears in the etching after the phase separation.

From an experiment similar to the above, it was confirmed that the phase separation can be avoided or the level thereof can be relaxed even when the above-mentioned bivalent metal oxides were added by 0.1% or more. The bivalent metal oxides, however, may form hardly-soluble fluoride salt after being dissolved in fluorine, and may be deposited on the substrate surface. This deposit prevents homogeneous etching. In this light, the total amount of contents of the bivalent metal oxides may stay 2% or less.

### INDUSTRIAL APPLICABILITY

According to the present invention, it is possible to effectively manufacture a glass substrate having a minute texture on the surface, and having good acid durability. This glass substrate is of high utility value in the use, in particular, that requires high chemical resistance, that is, the use of Micro Total Analysis Systems (µTAS), for example, as well as in the conventional use. When a silica glass is used, the glass substrate obtained according to the present invention is of high utility value when used, in particular, in an a thermal optical micro-lens, a diffraction grating, and the like.

## Claims

1. A method for manufacturing a glass substrate having an uneven surface, the method comprising pressing a predetermined area on the surface of the glass substrate and etching an area including the pressed predetermined area, thereby forming unevenness on a surface,
wherein the glass substrate includes at least one oxide selected from the group consisting of SiO₂, B₂O₃, P₂O₅, GeO₂, As₂O₅, ZrO₂, TiO₂, SnO₂, Al₂O₃, MgO, and BeO, and has a composition wherein the content of the at least one oxide is above 90 mol %.

2. The method for manufacturing a glass substrate according to claim 1, wherein the composition contains SiO₂ as an essential component.

3. The method for manufacturing a glass substrate according to claim 2, wherein the content of SiO₂ in the composition is 74 mol % or more.

4. The method for manufacturing a glass substrate according to claim 3, wherein a value in which the content of Al₂O₃ is subtracted from a content of SiO₂ is 70 mol % or more in the composition.

5. The method for manufacturing a glass substrate according to claim 2, wherein the composition contains at least one selected from the group consisting of Al₂O₃ and B₂O₃ as an essential component.

6. The method for manufacturing a glass substrate according to claim 5, wherein the content of at least one selected from the group consisting of Al₂O₃ and B₂O₃ is 5 to 20 mol % in the composition.

7. The method for manufacturing a glass substrate according to claim 5, wherein the total of contents of SiO₂, Al₂O₃, and B₂O₃ is 90 mol % or more in the composition.

8. The method for manufacturing a glass substrate according to claim 1, wherein the content of the at least one oxide is 93 to 95 mol %.

9. The method for manufacturing a glass substrate according to claim 1, wherein the composition contains 0.1 mol % or more of at least one selected from the group consisting of bivalent metal oxides and K₂O.

10. The method for manufacturing a glass substrate according to claim 1, wherein the composition is substantially free from Li₂O.

11. The method for manufacturing a glass substrate according to claim 2, wherein the glass substrate is a silica glass.

12. A glass substrate, obtained according to claim 1, having an uneven surface.
